# EUROPEAN PATENT APPLICATION

(11) **EP 0 992 924 A2**
(43) Date of publication of application: **12.04.2000**
(21) Application number: 99307582.9
(22) Date of filing: 24.09.1999
(51) Int. Cl.: G06F 17/60

(54) **Privacy-enabled loyalty card system and method**

(30) Priority: 02.10.1998 US 165457
(71) Applicant: NCR International, Inc., Dayton, Ohio 45479 (US)
(72) Inventor: O'Flaherty, Kenneth W., San Diego, CA 92130 (US); Watts, Reid M., Lexington, SC 29072 (US); Ramsay, David A., Lexington, SC 29072 (US)
(74) Representative: Cleary, Fidelma

(57) **Abstract**

A method, apparatus, article of manufacture, and a memory structure for controlling the collection and dissemination of data stored in a data warehouse is disclosed.

The method comprises the steps of accepting a request for a privacy card from a consumer, querying the consumer for consumer personal information and privacy preferences, storing a customer unique proxy identifying the customer in the data warehouse, and issuing a privacy card comprising the proxy to the customer. The program storage device comprises a medium for storing instructions performing the method steps outlined above. The apparatus comprises a means for accepting the request for a privacy card from the consumer and for querying the consumer for personal information an privacy preferences, such as a kiosk, ATM or internet connection, a data warehouse for storing the customer unique proxy, and a means for issuing the privacy card.

## Description

The present invention relates to systems and methods of data warehousing and analysis, and in particular to a system and method for enforcing privacy constraints on a database management system.

Database management systems are used to collect, store, disseminate, and analyze data. These large-scale integrated database management systems provide an efficient, consistent, and secure data warehousing capability for storing, retrieving, and analyzing vast amounts of data. This ability to collect, analyze, and manage massive amounts of information has become a virtual necessity in business today.

The information stored by these data warehouses can come from a variety of sources. One important data warehousing application involves the collection and analysis of information collected in the course of commercial transactions between businesses and consumers. For example, when an individual uses a credit card to purchase an item at a retail store, the identity of the customer, the item purchased, the purchase amount and other related information are collected. Traditionally, this information is used by the retailer to determine if the transaction should be completed, and to control product inventory. Such data can also be used to determine temporal and geographical purchasing trends.

Similar uses of personal data occur in other industries. For example, in banking, the buying patterns of consumers can be divined by analyzing their credit card transaction profile or their checking/savings account activity, and consumers with certain profiles can be identified as potential customers for new services, such as mortgages or individual retirement accounts. Further, in the telecommunications industry, consumer telephone calling patterns can be analyzed from call-detail records, and individuals with certain profiles can be identified for selling additional services, such as a second phone line or call waiting.

Additionally, data warehouse owners typically purchase data from third parties, to enrich transactional data. This enrichment process adds demographic data such as household membership, income, employer, and other personal data.

The data collected during such transactions is also useful in other applications. For example, information regarding a particular transaction can be correlated to personal information about the consumer (age, occupation, residential area, income, etc.) to generate statistical information. In some cases, this personal information can be broadly classified into two groups: information that reveals the identity of the consumer, and information that does not. Information that does not reveal the identity of the consumer is useful because it can be used to generate information about the purchasing proclivities of consumers with similar personal characteristics. Personal information that reveals the identity of the consumer can be used for a more focused and personalized marketing approach in which the purchasing habits of each individual consumer are analyzed to identify candidates for additional or tailored marketing.

Another example of an increase in the collection of personal data is evidenced by the recent proliferation of"membership" or "loyalty" cards. These cards provide the consumer with reduced prices for certain products, but each time the consumer uses the card with the purchase, information about the consumer's buying habits is collected. The same information can be obtained in an on-line environment, or purchases with smart cards, telephone cards, and debit or credit cards.

Unfortunately, while the collection and analysis of such data can be of great public benefit, it can also be the subject of considerable abuse. In the case of loyalty programs, the potential for such abuse can prevent many otherwise cooperative consumers from signing up for membership awards or other programs. It can also discourage the use of emerging technology, such as cash cards, and foster continuation of more conservative payment methods such as cash and checks. In fact, public concern over privacy is believed to be a factor holding back the anticipated explosive growth in web commerce.

For all of these reasons, as well as regulatory constrains, when personal information is stored in data warehouses, it is incumbent on those that control this data to protect the data from such abuse. As more and more data is collected in this, the computer age, the rights of individuals regarding the use of data pertaining to them have become of greater importance.

It is an object of the present invention to provide a system and method which provides all the advantages of a complete data warehousing system, while addressing the privacy concerns of the consumer.

From a first aspect, the present invention resides in a method of controlling the collection and dissemination of data stored in a data warehouse, characterized by the steps of:
accepting a request for a privacy card from a consumer;
querying the consumer for consumer personal information and privacy preferences;
storing a customer unique proxy identifying the customer in the data warehouse; and
issuing a privacy card comprising the proxy to the customer.

From a second aspect, the present invention resides in an apparatus for controlling the collection and dissemination of data stored in a data warehouse, characterized by:
means for accepting a request for a privacy card from a consumer;
means for querying the consumer for consumer personal information and privacy preferences;
means for storing a customer unique proxy identifying the customer in the data warehouse; and
means for issuing a privacy card comprising the proxy to the customer.

From a third aspect, the present invention resides in a program storage device, readable by a computer, embodying one or more instructions executable by the computer to perform method steps for controlling the collection and dissemination of data stored in a data warehouse, the method steps characterized by the steps of:
accepting a request for a privacy card from a consumer;
querying the consumer for consumer personal information and privacy preferences;
storing a customer unique proxy identifying the customer in the data warehouse; and
issuing a privacy card comprising the proxy to the customer.

One embodiment of the present invention also utilizes a privacy metadata system that administers and records all data, users, and usage of data that is registered as containing privacy elements.. This metadata service provides for locating, consolidating, managing, and navigating warehouse metadata. It also allows for setting aside an area from which all system aspects of privacy are registered, administered, and logged in an auditable format.

Embodiments of the present invention will now be described by way of reference only to the accompanying drawings in which:
FIG. 1 is a system block diagram of an exemplary embodiment of a data warehousing system;
FIG. 2 is a block diagram presenting an illustrative example of the structure of customer tables stored in the privacy-extended customer tables and the database views;
FIG. 3 is a block diagram presenting another illustrative example of the customer tables; and
FIG. 4 is a block diagram presenting an overview of the operation of a privacy auditing features of the present invention;
FIG. 5 is a flow chart illustrating exemplary operations used to practice one embodiment of the present invention;
FIG. 6 is a flow chart illustrating exemplary operations used to store a customer-unique proxy identifying the customer in the data warehouse;
FIG. 7 is a flow chart illustrating another embodiment of exemplary operations used to store a customer-unique proxy identifying the customer in the data warehouse;
FIG. 8 is a flow chart illustrating exemplary operations used to perform a transaction with a loyalty card;
FIG. 9 is a flow chart illustrating exemplary operations used to manage the customer's privacy preferences with a loyalty card;
FIG. 10 is a diagram showing an alternative embodiment of the privacy data warehouse with a separately deployed trusted database;
FIG. 11 is a diagram showing an alternative embodiment of the privacy data warehouse with a privacy metadata services interface interposed to manage and log all data access; and
FIG. 12 is a diagram showing an exemplary implementation of dataviews with an interposed privacy metadata services interface.

### Overview

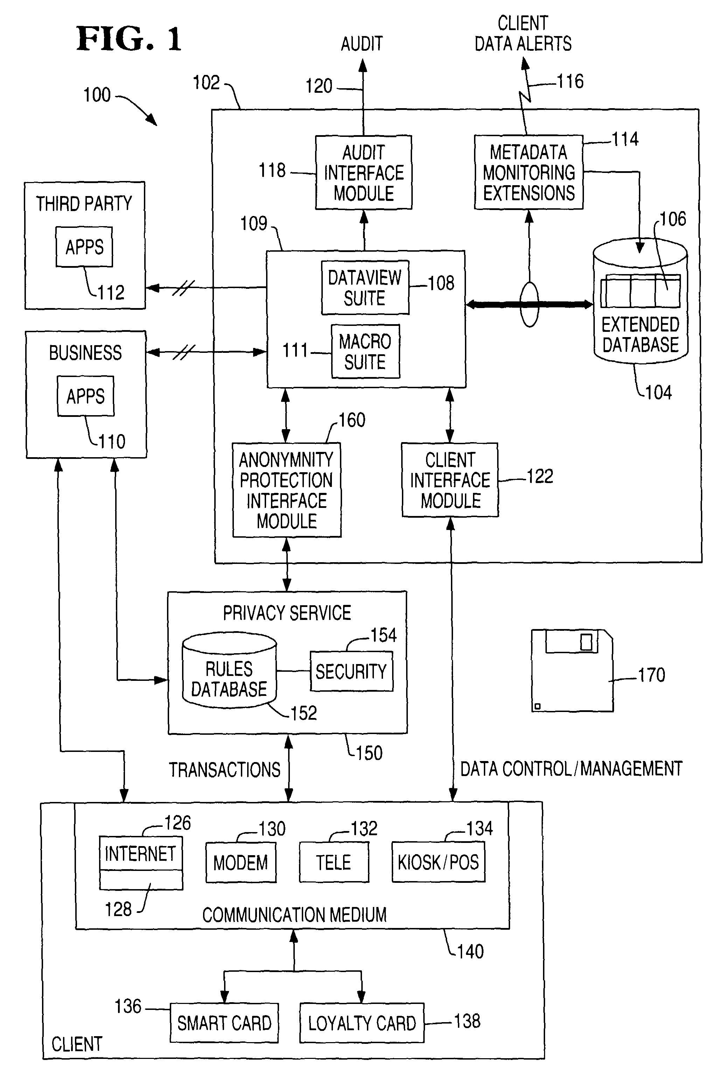

FIG. 1 is a system block diagram presenting an overview of a data warehousing system 100. The system comprises secure data warehouse 102 having a database management system 104 storing one or more extended databases 106 therein.

One important capability of a database management system is the ability to define a virtual table and save that definition in the database as metadata with a user-defined name. The object formed by this operation is known as a View or a database view (the particular database views used in the present invention are hereinafter referred to as "dataviews"). As a virtual table, a dataview is not physically materialized anywhere in the database until it is needed. All accesses to data, (with the possible exception of data access for administrative purposes) is accomplished through dataviews. To implement a variety of privacy rules, a suite of a plurality of dataviews is provided. Metadata about the privacy dataviews (including the dataview name, names and data types of the dataview columns, and the method by which the rows are to be derived) is stored persistently in the databases metadata, but the actual data presented by the view is not physically stored anywhere in association with the derived table. Instead, the data itself is stored in a persistent base table, and the view's rows are derived from that base table. Although the dataview is a virtual table, operations can be performed against dataviews just as they can be performed against the base tables.

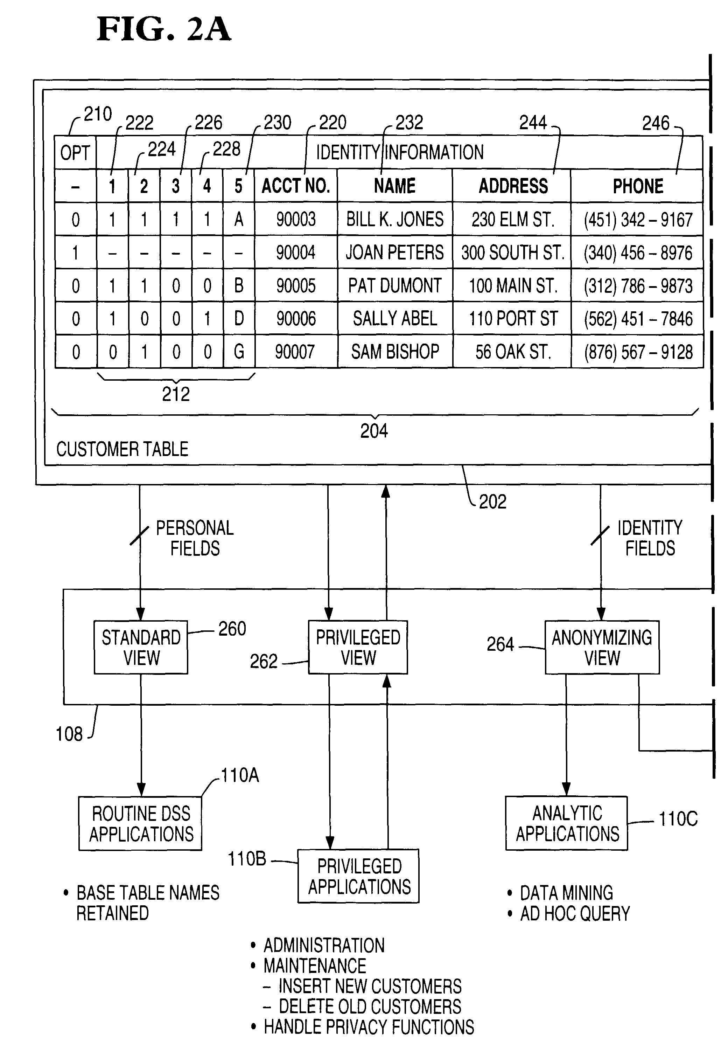

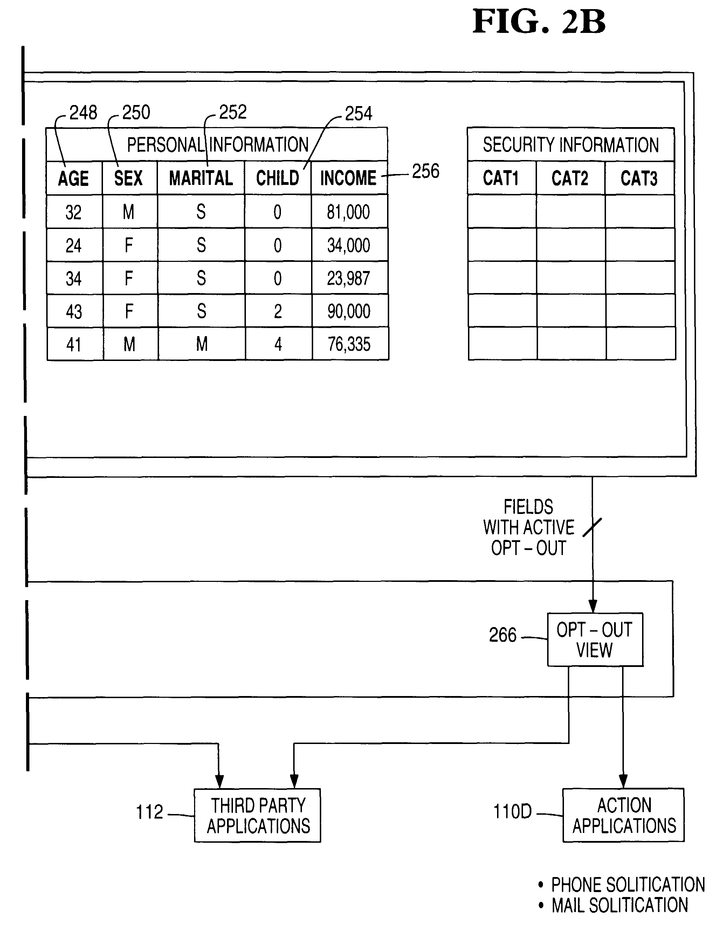

The secure data warehouse 102 further comprises a suite of privacy metadata dataviews 108 through which all data in the extended database 106 are presented. Data within the extended database 106 can be viewed, processed, or altered only through the dataviews in this suite. The schema and logical model of the extended database and dataviews is set forth more fully herein with respect to FIG. 2.

Virtually all access to the data stored in the extended database 106 is provided solely through the dataview suite 108. Thus, business applications 110 and third party applications 112 have access only to such data as permitted by the database view provided. In one embodiment, provision is made to permit override of the customer's privacy preferences. However, in such circumstances, data describing the nature of the override is written to the database for retrieval by the audit module 118, so that the override cannot occur surreptitiously. Further, overrides may be monitored by the privacy metadata monitoring extensions 114 to provide an alert to the consumer when such overrides occur.

The limiting access to the data stored in the extended database 106 to access provided by the privacy dataview suite 108 for purposes of (1) implementing privacy rules provides the capability to make the personal data anonymous (through the anonymizing view described herein), (2) to restrict access to opted-out columns, which can apply to all personal data, separate categories of personal data, or individual data columns, and (3) to exclude entire rows (customer records) for opt-out purposes based on customer opt-outs (excluding a row if any of the applicable opt-out flags has been set for the customer in question, thus preventing any direct marketing or disclosure to third parties).

Using a client interface module 122 that communicates with the dataviews 108, a client 124 can access, control, and manage the data collected from the client 124. This data control and management can be accomplished using a wide variety of communication media 140, including the Internet 126 (via a suitable browser plug-in 128, a modem 130, voice telephone communications 132, or a kiosk 134 or other device at the point of sale. To facilitate such communications, the kiosk or other device at the point of sale, can issue a smartcard 136 or a loyalty card 138. The kiosk/pos device 134 can accept consumer input regarding privacy preferences, and issue a smartcard 136 or loyalty card 138 storing information regarding these preferences. Similarly, the using the kiosk/pos device 134 and the smartcard 136 or loyalty card 138, the consumer may update or change preferences as desired. In cases where the loyalty card 138 is a simple read only device (such as a bar-coded attachment to a key ring), the kiosk/pos device 134 can issue replacement cards with the updated information as necessary. Transactions using the loyalty card 138 or smartcard 136 are selectably encrypted and anonymous. Either card may interact directly with the server or through a plug-in to implement the security rules selected.

Through this interface, the consumer can specify data sharing and retention preferences. These preferences include data retention preferences, and data sharing preferences. These allow the consumer to specify when and under what circumstances personal information may be retained or shared with or sold to others. For example, the consumer may permit such data retention as a part of a loyalty card program, or if the use of the data is limited to particular uses. Further, the consumer may specify under what circumstances the data may be sold outright, used for statistical analysis purposes, or used for third party elective marketing programs.

The data warehousing system 100 also permits anonymous communication between the client and the secure data warehouse 102 via a privacy service 150. When the user desires an anonymous transaction, the transaction is routed to the privacy service 150. The privacy service 150 accesses a privacy rule database 152 and other security information 154 and uses the privacy rule and security information to remove all information from which the identity of the consumer can be determined. The cleansed transaction information is then forwarded to the anonymity protection interface module 160 in the secure data warehouse. Communications with the secure data warehouse 102 use a proxy user identification, which is created by the privacy service 150 from the customer's username or other identifying information. If the customer does not require an anonymous transaction, the transaction is provided directly to the retailer who may store the transaction information in the extended database.

Since it alone provides access to data within the extended database, the dataview suite 108 also provides a convenient and comprehensive means for auditing the security of the secure data warehouse 102.

The secure data warehouse 102 also comprises metadata monitoring extension 114. This extension 114 allows the customer to generate a rule to monitor the use of personal data, and to transmit an alert 116 or callback if a metadata definition change occurs. The consumer can control the metadata monitoring extension 114 to trigger an alert when the customer's personal information is read from the extended database 106, is written to the extended database 106, if the opt-out delimiters stored in the extended database are changed, or when a table or a dataview is accessed. Alternatively, triggered alerts can be logged for later access by the consumer.

The metadata monitoring extension 114 also records data source information, so customers can determine the source ofthe data stored in the secure data warehouse 102. The data source may be the customer, or may be a third party intermediary source. This feature is particularly useful when the consumer would like to not only correct erroneous information, but to determine the source of the erroneous information so the error will not be replicated in the same database or elsewhere.

Source data may also be stored in the data table for each column or set of columns so that the source of the data can be ascertained directly from table data. In this embodiment, the source identification is generalized so that each customer can have a different source of information without the need to replicate information source information in the metadata for all customers.

Similarly, the metadata monitoring extension 114 also records data target information, so that customers can determine who has been a recipient of their personal information. This feature is also useful for correcting replicated errors, as well as for monitoring disclosure activity relative to a consumer's personal information.

The metadata monitoring extension 114 can also be used to support auditing functions by tracking reads or writes from the extended database 106 as well as the changes to the dataview suite 108.

The present invention can be implemented in a computer comprising a processor and a memory, such as a random access memory (RAM). Such computer is typically operatively coupled to a display, which presents images such as windows to the user on a graphical user interface. The computer may be coupled to other devices, such as a keyboard, a mouse device, a printer, etc. Of course, those skilled in the art will recognize that any combination of the above components, or any number of different components, peripherals, and other devices, may be used with the computer.

Generally, the computer operates under control of an operating system stored in the memory, and interfaces with the user to accept inputs and commands and to present results through a graphical user interface (GUI) module. Although the GUI module is typically a separate module, the instructions performing the GUI functions can be resident or distributed in the operating system, an application program, or implemented with special purpose memory and processors. The computer may also implement a compiler that allows an application program written in a programming language such as COBOL, C++, FORTRAN, or other language to be translated into processor-readable code. After completion, the application accesses and manipulates data stored in the memory of the computer using the relationships and logic that was generated using the compiler.

In one embodiment, instructions implementing the operating system, the computer program, and the compiler are tangibly embodied in a computer-readable medium, e.g., data storage device 170, which could include one or more fixed or removable data storage devices, such as a zip drive, floppy disc drive, hard drive, CD-ROM drive, tape drive, etc. Further, the operating system and the computer program are comprised of instructions which, when read and executed by the computer, causes the computer to perform the steps necessary to implement and/or use the present invention. Computer program and/or operating instructions may also be tangibly embodied in memory and/or data communications devices, thereby making a computer program product or article of manufacture according to the invention. As such, the terms "program storage device," "article of manufacture" and "computer program product" as used herein are intended to encompass a computer program accessible from any computer readable device or media.

Those skilled in the art will recognize many modifications may be made to this configuration without departing from the scope of the present invention. For example, those skilled in the art will recognize that any combination of the above components, or any number of different components, peripherals, and other devices, may be used with the present invention.

### Logical Model

FIG. 2 is a diagram showing an exemplary logical model of the secure data warehouse 102 and the dataview suite 108 in greater detail. The extended database 106 comprises a customer table 202, which is segmented into three portions: an identity information portion 204, a personal information portion 206, and a sensitive information portion 208. The identity information portion 206 comprises data columns 220, 232, 244, and 246, which store information that reveals the identity of the consumer. These columns include a consumer account number column 220, name column 232, an address column 244, and a telephone number column 246. The identity portion 204 of the customer table 202 also comprises one or more data control columns 212, which specify data reflecting the privacy preferences, or "opt-outs" for the accompanying data. In the illustrated embodiment, columns 222-230 stores one or more characters ("A" or "D") or flags (represented by "1s" and "0s") which specify privacy preferences for the consumer's data records. In the disclosed embodiment, these privacy preferences include "opt-outs" for (1) direct marketing, (2) disclosure of personal data along with information identifying the consumer, (3) anonymous disclosure of personal data, (4) disclosure of personal data for purposes of making automated decisions, and (5) disclosure or use of sensitive data. The customer table 202 also comprises a global data control column 210. This column can be used to indicate that the consumer wants maximum privacy.

In the exemplary embodiment illustrated, a consumer named Bill K. Jones has permitted some data collection, analysis, or dissemination by selecting a "0" in the global data control column 210. He has further indicated that his consumer information can be used in direct marketing and can be disclosed to third parties, both with his identity, and anonymously. He has allowed the data to be used to perform automated processing, and will permit the dissemination of sensitive data.

In one embodiment, a TERADATA database management system is utilized to implement the foregoing logical model. This implementation has several advantages.

First, TERADATA's ability to store and handle large amounts of data eases the construction of the many different views and allows the secure data warehousing system 100 to utilize a logical data model in or close to the third normal form.

Second, unlike systems which execute SQL queries as a series of selections to narrow the data down to the dataview subset, the TERADATA database management system rewrites dataview-based queries to generate the SQL that selects the necessary columns directly from the appropriate base tables. While other views materialize entire tables before narrowing down the data to the view subset, TERADATA generates SQL that selectively pulls appropriate columns and rows into the result table. This method is a particularly advantageous in implementing the foregoing logical model.

Third, the foregoing logical model generally results in dataviews, which include complex queries and wide SQL expressions. The TERADATA database management system is particularly effective at optimizing such queries and SQL expressions.

Using the foregoing teaching, alternative logical models having alternatively defined data control column structures can be implemented to meet the particular privacy granularity and control needs of each database application.

### Dataviews

A number of dataviews are provided in the dataview suite 108. These dataviews include a standard view 260, a privileged view 262, an anonymizing view 264, and an opt-out view 266. These views limit visibility into the data in the customer table 202 in accordance with the values placed in the data control columns 212.

The standard view 260 will not present personal data unless either the flag in column 224 (indicating that the personal information and identifying information can be disseminated) or 226 (indicating that personal information can only be disseminated anonymously) is activated. Hence, the standard view 260 selectively masks personal data from view unless the consumer has had the appropriate flags set to the proper value.

Scaleable data warehouse (SDW) customer database administrators (DBAs) set up views into customer tables (any tables containing personal information about their customers), such that, for routine users, all columns of personal information are hidden. This allows all routine decision support (DSS) applications and tools with query access to the warehoused data to be precluded from viewing personal information and consequently, all end-users of these applications and tools are also precluded from viewing personal information as well.

To minimize disruption to existing SDW customers, dataviews are established using the same names that are used for base tables in any existing applications that access private data, and corresponding base table names can be renamed to some other value. Thus, whenever an existing application attempts to access private data (now via a dataview), the private data can be screened out by the dataview, depending on user privileges. Using this approach, there is no need to modify existing applications. Instead, the logical data model and database schema would be modified, and additional naming conventions would be introduced.

The privileged view 262 permits viewing, analysis, and alteration of all information. The privileged view 262 will be supplied only to privileged (Class "A" applications 110B, such as those required for administration and/or maintenance of the database (e.g. for inserting new customers, deleting ex-customers, handling address changes), and to those applications which handle privacy related functions (such as informing customers about personal information collected about them, changing/updating personal information, and applying "Opt-in/Opt-out" controls). For example, the client interface module 212, which is used to view, specify, and change consumer privacy preferences, is a privileged application. Appropriate security measures are undertaken to assure that the privileged applications are suitably identified as such, and to prevent privileged view 262 access by any entity that is not so authorized.

Certain SDW applications ("Class B") may perform analysis on personal data, in order to gain insight into customer behavior, eg. to identify trends or patterns. Such applications may be driven by end-users (knowledge workers or "power analysts") performing "ad hoc" queries, typically using either custom-built software or standard query or OLAP Tools, where the end-user spots the patterns. They may also involve the use of data mining tools, where statistical or machine learning algorithms, in conjunction with the analyst, discover patterns and from them build predictive models.

To derive the greatest value, analytic applications must have access to all available forms of personal information. In order to enable such access, while at the same time respecting personal privacy requirements, special "anonymizing" dataviews are used. These dataviews are designed to provide access to personal data fields, but to screen out all fields containing information that can identify the owner of the data (e.g. name, address, phone number, social security number, account numbers).

The anonymizing view 264 permits the viewing and analysis of personal information, but screens the information stored in the identity information portion 204 from view or analysis unless the flag in the column 224 (permitting disclosure of personal data along with information identifying the consumer) is selected. This data can be provided to analytic applications 110C, which permit data mining and ad-hoc queries. If the consumer permits, this information may also be provided to third party applications 112.

A further class of privileged applications ("Class C") includes applications that use personal information to take some form of action, such as marketing applications (e.g. to create mail or phone solicitations). These marketing applications are subject to the "Opt-in/Opt-out" controls set for each customer, and access customer information through a special dataview that removes or masks all records associated with an activated "Opt-out" indicator. Thus, for example, any customer who has opted out from receiving marketing solicitations would be omitted from any contact list created by the marketing application.

The "Opt out" indicator is a new column added to customer tables, or joined to existing customer tables via dataviews (which is an additional change to the logical data model). In one embodiment, the value of this column for each customer row is initially be set to "Opt Out" (or "Opt in" if permitted by law), and can be modified via the client interface module 122, which handles customer requests regarding privacy controls.

Multiple "Opt Out" indicators may be set up for each customer record. At a minimum, five opt-outs are implemented: for "direct marketing", "third-party disclosure of identifiable data", "third-party disclosure of anonymous data", automated decisions", and "use of sensitive data". However, a scheme of more fine-grained opt-outs could be designed, based on more detailed customer preferences. For example, "direct marketing" could be broken out into separate opt-outs for contact by telephone, direct mail, and electronic mail, and a catchall for "other" action. This would yield eight separate opt-outs.

Opt-out view 266 permits the use of information for purposes of making automated decisions with action applications 110D, such as those which implement phone or mail solicitation. Views into this information are controlled by the flag in column 228. Alternatively, the value stored in column 228 may comprise a character with sufficient range to permit the single character to not only define that solicitation is permitted, but to indicate what kind and scope of permitted solicitation.

Applications or queries that disclose personal data to third parties (e.g. for marketing or analytic purposes) are subject to both the Class C ("Opt Out") and Class B ("anonymizing") Views. If the customer has opted out of third-party use of their data, then the "Opt Out" dataview applies, and their row (record) is excluded from the output. Other customers may have opted in to third-party disclosure of their data provided it is anonymous; in these cases, the customer data is made anonymous via the "anonymizing" dataview before being output. In all other cases, the customer has opted in to disclosure of their personal data in identifiable form; here the personal data is output along with identifying data columns.

A more fine-grained approach to opting in or out may be implemented. Specific opt-ins or opt-outs could be agreed with each customer for a variety of permissions and protections. For example, disclosure to third parties could be based on specific data fields, relating both to personal characteristics and to personal identifications: a customer might agree to their address and interest profile being provided, but not their financial information and their phone number.

Opt-in/opt-out could also be further extended to gain a more detailed profile of each customer and their interests. For example, each class of opt-out (e.g. the eight opt-outs identified in section 4) could be applied separately to each category of personal data (e.g. demographic data; preference data), or down to each specific data item of personal data (e.g. age, gender; hiking interest, shoe brand preference). In this manner, customers could opt out of certain actions relating to certain interest areas, but could opt in to others (e.g. to receive direct mail marketing for running shoes).

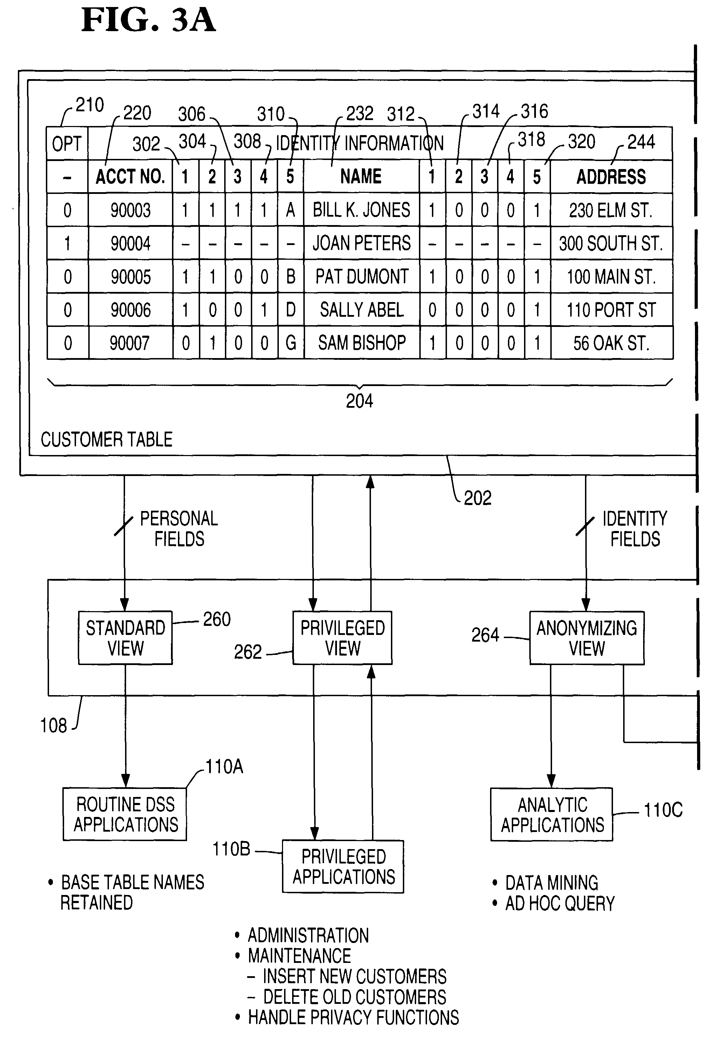

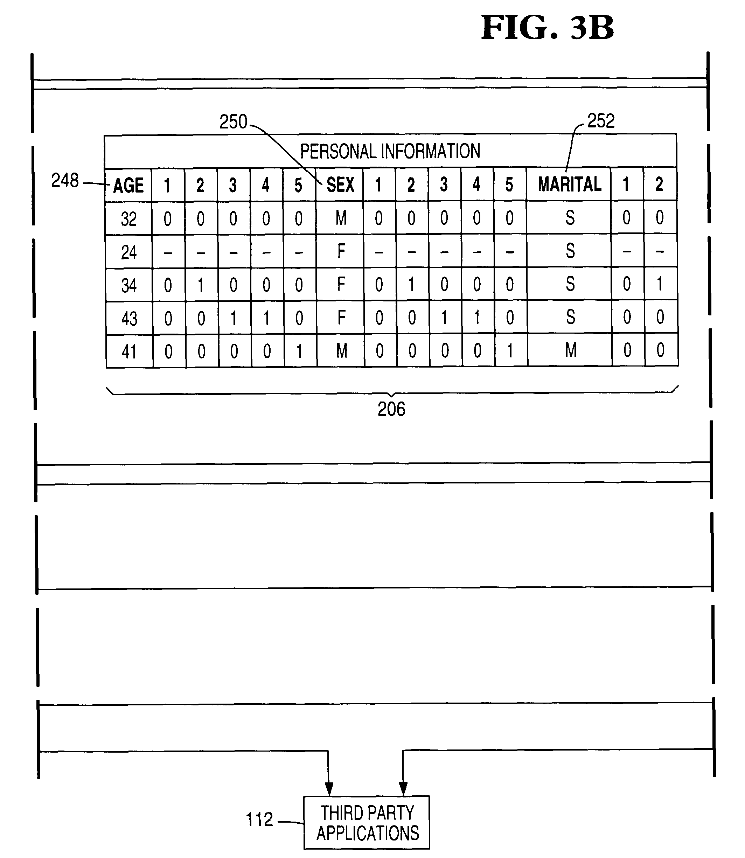

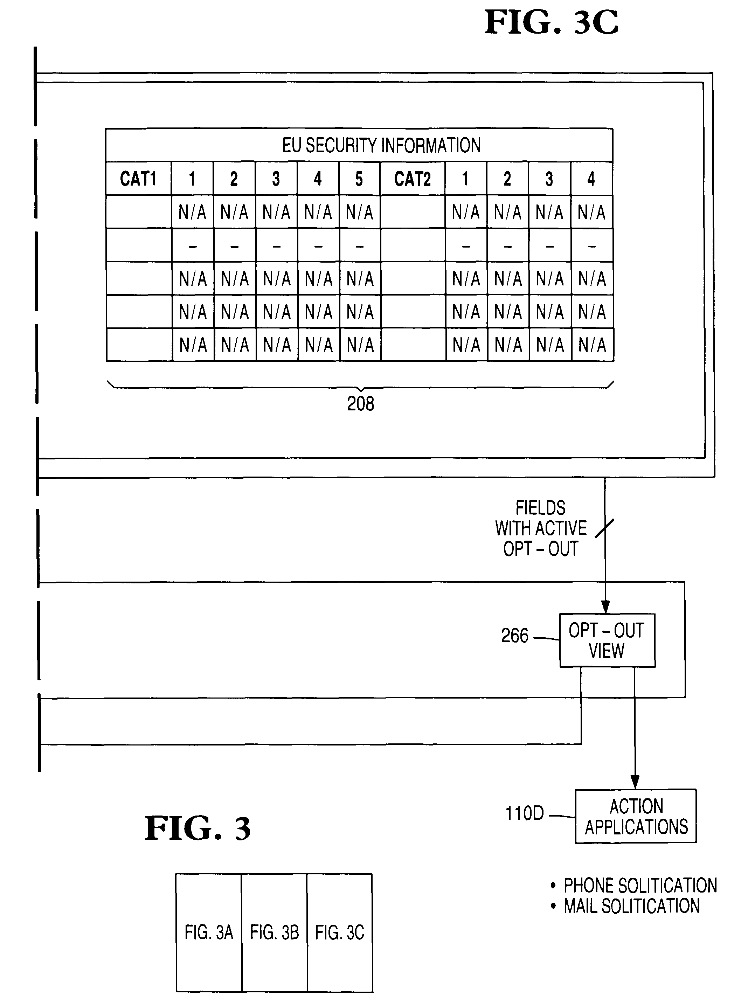

FIG. 3 is a diagram showing an alternative logical model of the secure data warehouse 102 with more fine-grained opt-ins and opt-outs. In this embodiment, each class of privacy preference is applied separately to each category of data (e.g. demographics), or down to each specific data item of personal data (e.g. age, gender, hiking interest, or shoe brand preference). For example, consumer Bill K. Jones may elect to allow his name to be accessible for some purposes, but not others. These limitations can be selected by entering the proper combination of flags for the entries in columns 302-310. Similarly, columns 312-320 can be used to specify the privacy preferences with regard to the storage and/or use of Mr. Jones' name. The preferences defined in columns 312-320 may be different or the same as those described in columns 302-310. The present invention also permits the expansion of the foregoing security preference paradigm to a system of multiple fine-grain preferences, based upon more detailed customer preferences. For example, direct marketing could be broken into separate privacy preferences for contact by telephone, direct mail, electronic mail, and a catchall for "other" action. Further, the scope of the direct marketing could be specified so as to permit only a single contact.

In an alternate embodiment, the security and privacy protection features of the extended database 106 and dataview suite 108 are further enhanced with the use of data encryption. This may be performed by encrypting the data in a given row with an encryption code, or by providing each data field with a unique encryption number. Alternatively, the data may be encrypted at different hierarchical levels of security so as to enforce the privacy preferences of the consumer.

In one embodiment, encryption techniques are used on any identifying field, and selectively applicable on a row basis. This technique allows customers to remain anonymous (e.g. for data mining purposes), but could allow for positive identification for those applications or data requestors that have data encryption rights.

### Operation of Dataviews

The dataviews in the dataview suite 108 of the present invention generate SQL statements that selectively pull appropriate columns and rows from the base tables into the result table. Compared to conventional techniques (which materialize entire tables before narrowing the data down to a view subset), this technique reduces the processing required to present the data to the data requestor.

### Audit Interface

The owner of the database or an independent auditing service such as BBB ONLINE, TRUSTE, PRICE-WATERHOUSE, TRW, DMA, or CPA WEBTRUST, or NCR may inexpensively run periodic or complaint-driven reviews of the installation. These reviews examine the logical data model and database schema, applications and users that exist for the system, and a TERADATA access log.

The logical data model review examines the dataview structure to confirm the existence of "Standard" Views for Normal users (restricting access to personal information), "Anonymizing" Views for analytic applications, and "Opt Out" Views for other applications.

The applications and user review examines applications and users and the access rights that have been granted to them. This review confirms that "Class A" privileged applications/users have access rights to the "Persona Data" dataview, that "Class B" analytic applications/users have access rights to "anonymizing" dataviews, that "Class C" action-taking applications/users have access rights to "Opt-out" views, that applications that create output tables or files of personal data have access rights to the "Opt Out" and "Anonymizing" Views, and that other applications use the "Standard" View.

Finally, the TERADATA access log or similar log from another database management system is reviewed to assure that the access activity that has occurred complies with the privacy parameters set forth by the data source.

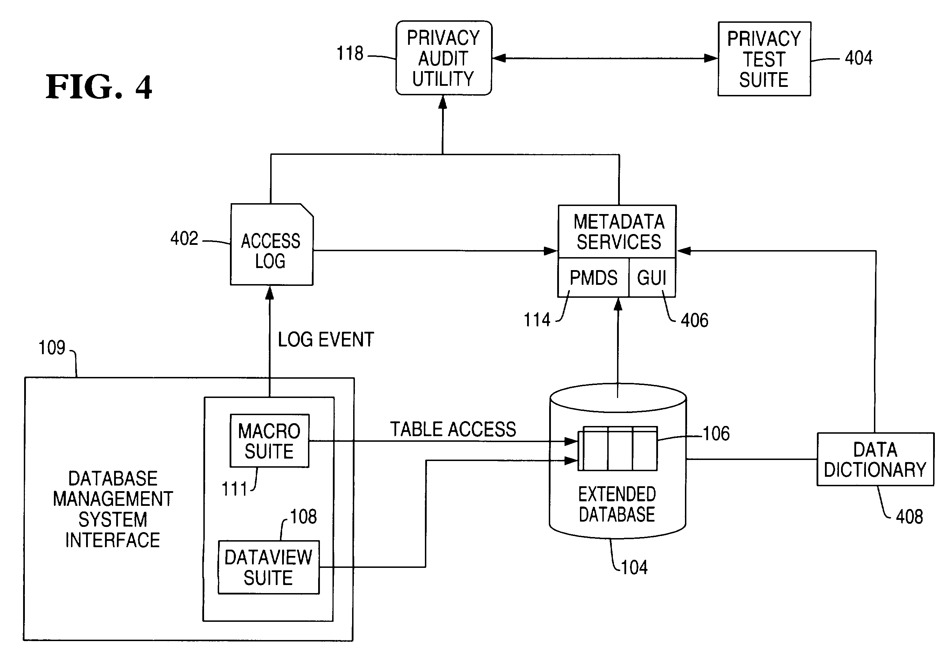

FIG. 4 is a diagram presenting an overview of the operation of a privacy auditing features of the present invention. Whenever a data requesting entity desires access to data in the extended database 106, a request is made to the database management system interface 109 which controls access to the data within the database tables in accordance with privacy parameters. Using a dataview provided from the dataview suite 108 to the requesting entity in accordance with the requesting entity's status as described herein, extended database 106 table is accessed, and the data is provided. At the same time, the database access (or attempted access, if the access is unsuccessful) is logged in an access log 402. Access log 402 includes information regarding the type of access or attempt, the text (SQL) of the request resulting in the access, the frequency of access, the action requested, the name or identification of the requesting entity or application, and the referenced objects (tables, dataviews, and/or macros). The access log 402 permits all accesses to the dataviews in the dataview suite 108, macros in the macro suite 111, or to base tables in the extended database 106 can be audited. All activities granting or revoking access privileges can be audited as well. This is made possible because the access log 402 contents and the table/dataview/macro definitions allow a determination of whether the privacy rules have been enforced or broken.

Privacy audit module 118 is provided to perform a privacy analysis of the data in the access log 402 to validate enforcement of the privacy parameters. The privacy audit module 118 traces all events related to privacy, summarizes activity relating to the access to personal data, and flags any suspected breaches of privacy rules. Privacy test suite 404 comprises programs and other procedures that attempt to "break" the privacy rules, and then examine the access log 402 to determine if privacy rules were enforced or breached. The privacy audit module 118 can be tailored for use by third party auditors who conduct an independent assessment of the enforcement of customer privacy preferences, or by for use by the data warehouse manager.

### Metadata Services

Metadata services include a privacy metadata subsystem (PMDS) extension 114. The PMDS extension 114 stores and tracks a number of parameters, and uses these parameters to track activity relating to privacy. Tracked parameters include: (1) data descriptions of all data elements currently in the system (including databases, users, tables, views and macros); (2) data descriptions of internal elements that were source to the system; (3) data descriptions of external elements that were source to the system; (4) data descriptions of internal elements that were target of the system; (5) data descriptions of data elements that were exported from the system; (6) profiles of all users, groups and applications and their access rights to the data; (7) logging of events relating to data access/update, creation of tables/views/macros, granting/revoking of privileges, changes in user profiles, and triggers.

The PMDS extension 114 also stores and manages executable business rules that govern the data controller's adherence to privacy and the logging of events relating to manipulation of the TERADATA logs (e.g. BEGIN/END LOGGING) or similar logs in another DBMS.

The PMDS extension 114 also provides a high-level GUI 406 to for the privacy administrator to review and manage privacy-related metadata. This will include a graphical representation of the databases and their table/view macro structure for all customer (consumer or data subject) information, and of the associated user/user group privileges. The GUI 406 also provides a parameter-driven means of setting up privacy rules and generating consequent dataviews, macros, or access rights, based on definitions provided by the privacy administrator through the GUI 406. The GUI 406 also provides a facility to guide an outside auditor through a review of the site's privacy implementation.

The PMDS extension 114 also provides a reporting facility, which analyzes the contents of the various database and PMDS logs to report on privacy-related activity. The privacy administrator may review such privacy reports via an interactive interface or printed report. Independent auditors, in conjunction with the privacy administrator, may perform their audits with the assistance of such reports.

The PMDS extension 114 also provides a separate GUI application/utility to support consumers in access, review and correction of their personal data and related privacy rules, and may also provide additional logging facilities to provide more details pertaining to privacy related events.

### Macros

Either alone or in combination with the dataviews described herein, macros 111 or stored procedures in the database management system interface can be used to control and log accesses to data. Where macros are used to enforce data privacy parameters, users are not given "select" access rights. Instead, users are given the right to access a macro in the macro suite 111 that performs the actual data access and logs the event in the access log 402 for future auditing purposes. Even so, the macros execute against the data through the same views that restrict access to opted-out rows and columns. Such macros are especially appropriate for recording single-row accesses.

### Data Dictionary

The data dictionary 408 stores information about the database schema, including all tables, dataviews and macros in the system, all macros in the system, all users and their privileges (including the privileges of users owning macros).

### Process

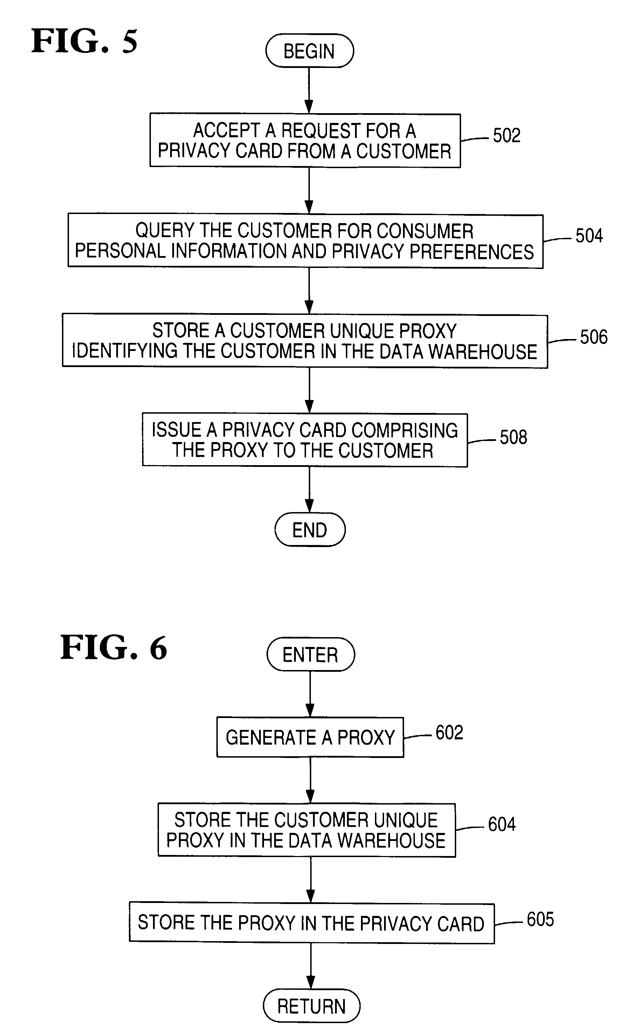

FIG. 5 is a flow chart illustrating exemplary operations used to practice one embodiment of the present invention. The process begins by accepting a request for a consumer privacy card such as a loyalty card 138 or a smart card 136 from a consumer. This can be accomplished via an Internet 126 connection, through a modem 130, a telephone 132, or a kiosk or ATM 134. This is illustrated in block 502. Then, the consumer is queried 504 for consumer personal information (such as the consumer's name, address, and telephone number), and the consumer's privacy preferences as set forth above. The consumer then enters the requested information. A customer-unique proxy identifying the customer is then generated, associated with the consumer's personal information, and stored in the data warehouse 102. This is depicted in block 506. A privacy card, which manifests the customer privacy preferences, is then issued 508 to the consumer. The privacy card may be a smart card with memory and limited processing and I/O capability, or may simply be a card with a bar code.

FIG. 6 is a flow chart illustrating exemplary operations performed to store a customer-unique proxy identifying the customer in the data warehouse. First, a proxy is generated, as shown in block 602. Then, the generated proxy is stored in the data warehouse 102 and the privacy card, as shown in blocks 604 and 605.

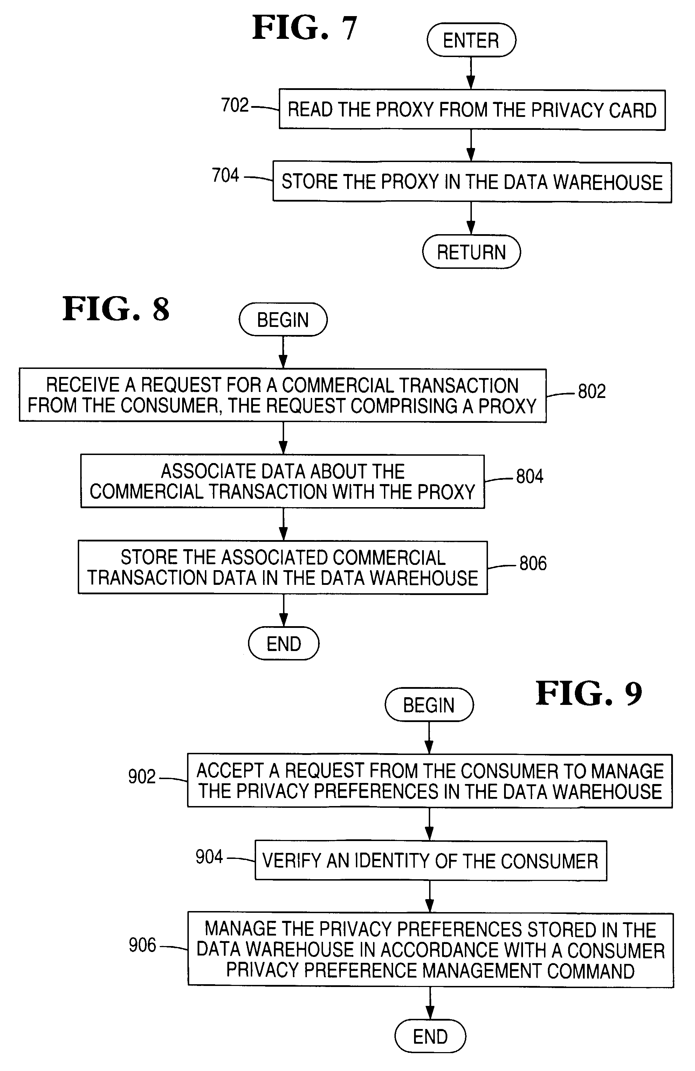

FIG. 7 is a flow chart illustrating exemplary operations performed to store a customer unique proxy identifying the customer in the data warehouse where the privacy card is a simple loyalty card with a read-only capability such as a barcode. In this embodiment, a pre-stored proxy is read from the card (i.e. the bar code on the card), and transmitted and stored in the data warehouse. This is illustrated in blocks 702 and 704, respectively. Alternatively, the barcode or other manifestation of the proxy can be printed at the kiosk or ATM 134, or by a printer attached to the consumer's computer.

FIG. 8 is a flow chart illustrating exemplary operations performed in participating in a commercial transaction using the privacy card. First, a request for a transaction, which includes the consumer's unique proxy, is received from the consumer, as shown in block 802. The consumer completes the transaction, and the data about the transaction is associated the proxy, as shown in block 804. The transaction data is then stored in the data warehouse 102 so that its association with the proxy is maintained, as shown in block 806.

FIG. 9 is a flow chart illustrating exemplary operations performed in using the privacy card to manage the consumer's privacy preferences. First, a request is received and accepted 902 from the consumer to manage the privacy preferences in the data warehouse. This request includes the consumer's proxy, and is typically encrypted to assure security. After the identity of the customer is verified 904, the customer can then view, alter, and otherwise manage the privacy preferences stored in the data warehouse.

As described in the foregoing operations, a consumer may sign up for a privacy card at an ATM-like self-service kiosk machine 134 in a retail establishment. The machine queries the consumer about various privacy preferences, collects his/her name, telephone numbers, and mailing address, and issues a universal privacy card that can be used immediately in any participating establishment to gain access to special treatment (e.g. "frequent shopper") privileges, special discounts, and bonus points (e.g. "frequent flyer miles").

By interacting with the kiosk 134, the consumer is able to trade off privacy for special benefits at a detailed level. For example, the consumer can say that they wants a particular "junk mail" flyer or catalog, but not another. Or that the consumer is willing to be called at home by a particular type of store, or a particular store, but only during certain hours. In other words, the privacy card puts the consumer in complete control over what data is collected, and what is done with the data. All privacy preferences are changeable at any time, with complete assurance by the consumer that the new preferences will be adhered to. Furthermore, the consumer does not need to trust every retail establishment to follow the privacy preferences - the consumer must only trust the privacy protection service bureau that issues the card and tracks the consumer's preferences. Finally, since the privacy card works in any participating establishment, the consumer need only carry one card and administer one privacy preference profile.

The foregoing allows retailers to meet the consumers preferences, instead of irritating customers with unwanted junk mail, unwanted phone calls, spam, etc. Furthermore, retailers are able to save significant cost in avoiding mass-mailings and unneeded telephone calls. Lastly, the retailer may perform detailed analyses on the shopping patterns of their most loyal customers, without running any risk of violating their privacy desires or rights. Coupled with automatic recognition systems, a retailer can even sense when a customer enters a retail outlet and determine to what degree that customer wants to be greeted by name left anonymous, or whether they prefer help or to walk the store uninterrupted.

Since the foregoing system puts the consumer in charge of their own privacy, with assurance that the retailers are unable to circumvent the consumers preferences, there is no need for regulatory or legal controls over data mining, junk mail, outbound telemarketing, or spam.

In one embodiment, the privacy card is a smart card with some amount of memory, some computational ability, and some software on it. When attached to the smart card reader at the retailer's point of sale (POS) station, it generates an id number that is a unique customer identification that is different for each retail establishment, but is consistent between visits and between individual stores owned by the same retailer. When plugged into a smart card reader in the consumer's home PC, it also generates the same id number when the consumer is interacting with the retailer's web site. A third party - the privacy protection service bureau, can only do mailing address, telephone numbers, and email address the translation between the consumer's id number and their name. Thus, although the retailer can track the buying behavior of that consumer, it never knows who the consumer actually is. If the consumer was willing to fill in demographic data as part of their loyalty card profile, and allow it to be accessible to the retailer, the retailer has access to that as well via the privacy protection service.

When the retailer wished to contact the consumer, either via mail, telephone, or email, it must inform the privacy protection service via a computer protocol. The privacy protection service's computer checks the most recent privacy profile for that consumer, and, if the consumer allows it, forwards the email, sets up the telephone call, or mails the flyer to the consumer.

### Alternative Embodiments

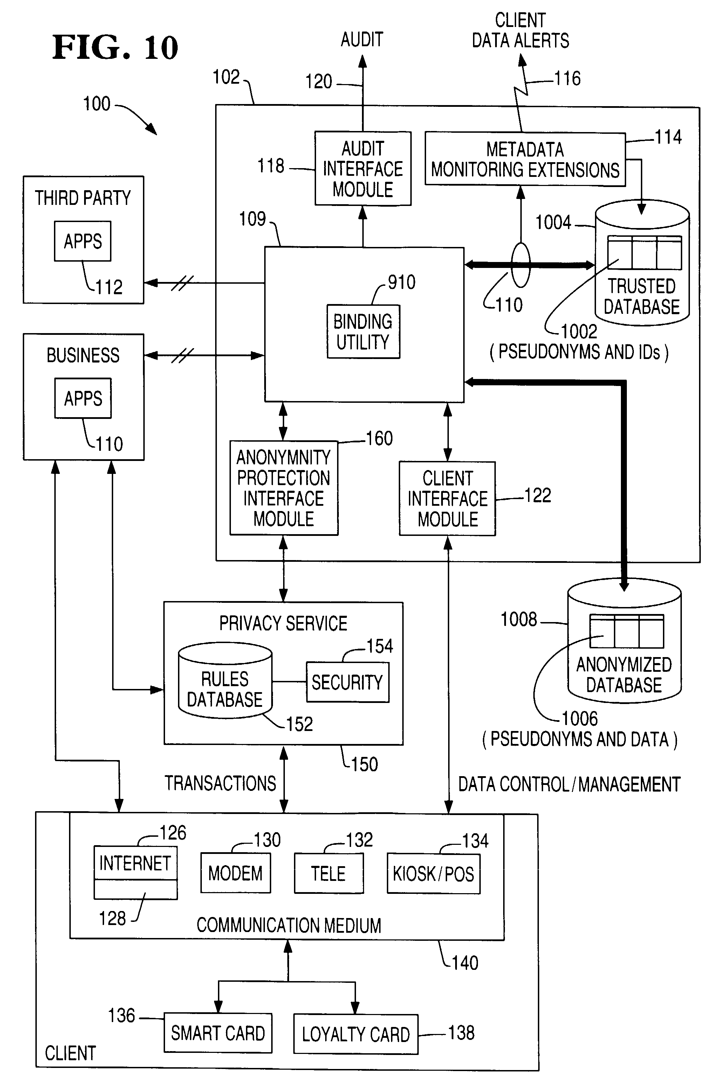

FIG. 10 is a block diagram showing an alternative embodiment of the present invention. In this embodiment, two databases are used. The first is an anonymized database 708, storing anonymized data and pseudonyms associated with the data in tables 706 stored therein. The second database is a trusted database 1004, storing tables 1002 relating the pseudonyms with customer identification information. In this approach, the customer's name is stored separately in trusted database 1004. This database is used by the data management system interface 109 to bind the identity of the customer to the pseudonym, and hence to the data stored in the anonymized database 1008. The trusted database also stores the individual's privacy parameters.

Client pseudonyms can be provided to the client by the issuance of a loyalty card 138 or smart card 136, by Internet 126 or on-line communications with a client computer, or by other means. The pseudonym can then be used as a proxy for consumer transactions (thus keeping any data thus collected anonymous). If desired, different pseudonyms can be used for different merchants, or different stores to prevent data mining to ascertain the identity of the customer.

The customer may elect to allow the collection, use, or dissemination of non-anonymous data by selecting data privacy preferences. These preferences are enforced by the data management system interface 109, and are provided by the client using the loyalty card 138, smart card 136, Internet 136, or other communication/data storage method. In one embodiment, an intelligent software agent performs data mining functions to examine customer patterns and to make data privacy parameter suggestions based on the mining results.

In another embodiment, the separate trusted database 1004 and anonymized database 1008 are used in a multi level security privacy system, where the encryption, macros, dataviews, and/ or separate database techniques disclosed herein combined to meet the privacy requirements of different jurisdictions, for different retail outlets, or to accommodate different individual preferences.

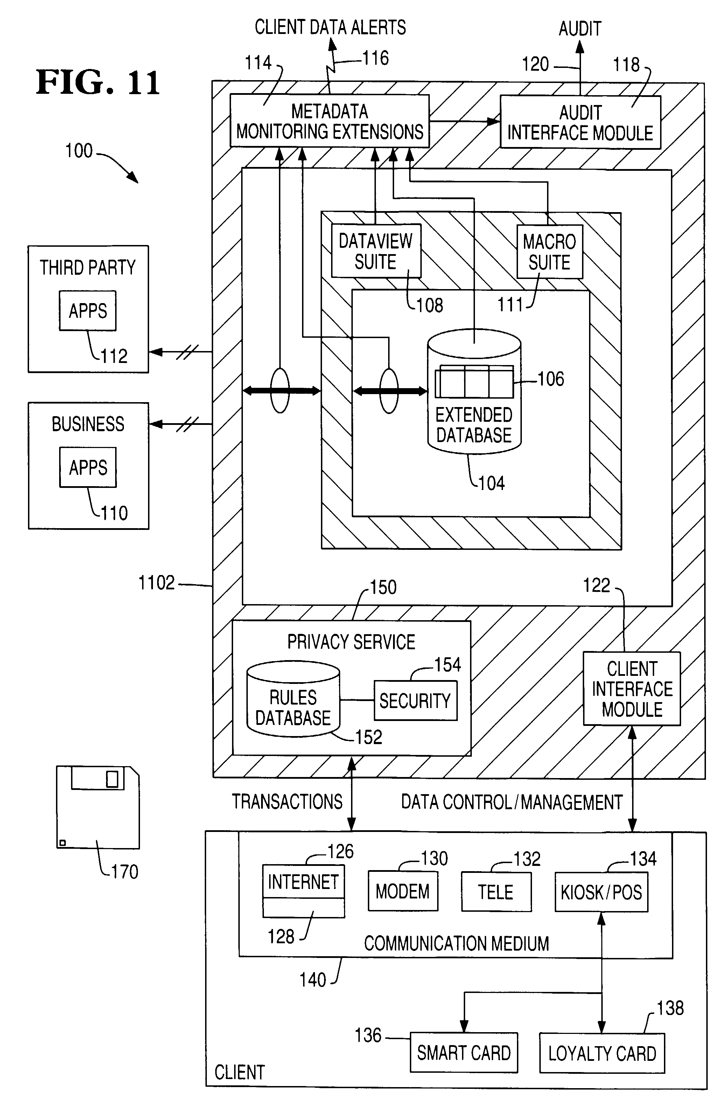

FIG. 11 is a diagram showing another alternative embodiment of the privacy data warehouse. As with the other embodiments previously described, access to the data in the database management system 104 is again accomplished via a dataview in the dataview suite 108, or a macro in the macro suite 111. In this embodiment, a privacy metadata services interface 802 comprising the privacy service 150, the client interface module 122, metadata monitoring extensions 114, and the audit interface 118 is also interposed between all accesses to the database management system 104. The privacy metadata services interface 1102 can therefore log and control all access to the database management system 104, the dataviews in the dataview suite 108, and macros in the macro suite 111.

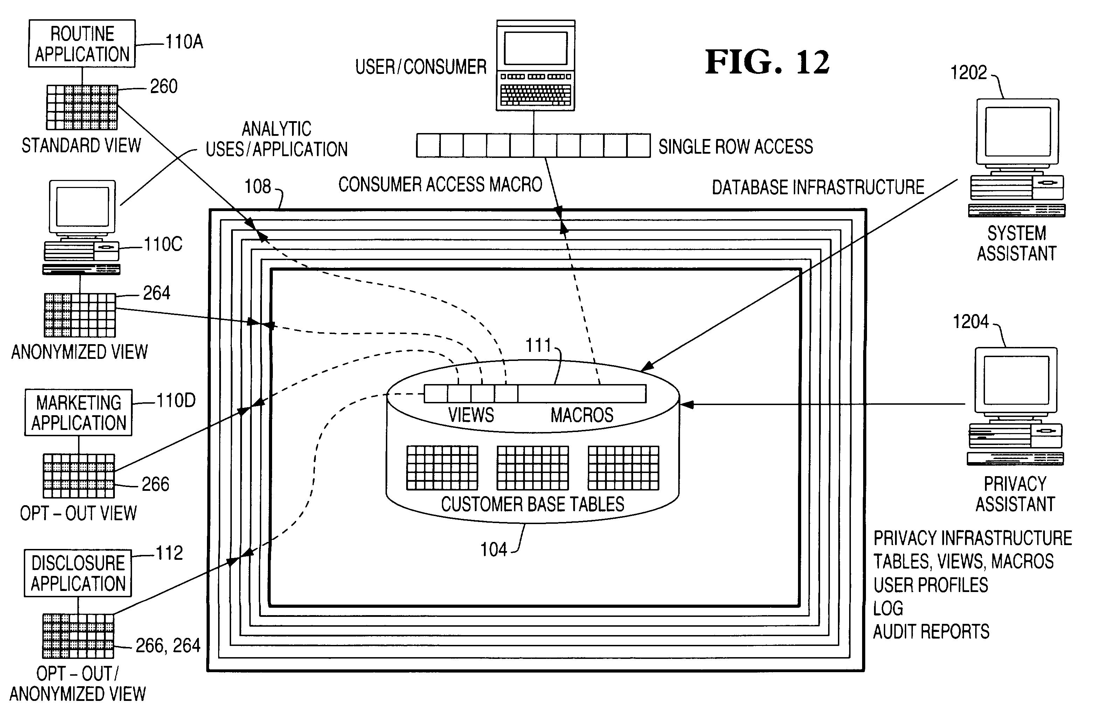

FIG. 12 is a diagram showing an exemplary implementation of dataviews with an interposed privacy metadata services interface. Visibility and access to the data in the customer base tables in the database management system 104 is provided by dataviews and macros 111. The views into the data are represented by the concentric squares shown in FIG. 12. A consumer access macro or consumer view provides the user/consumer with access to a single row of the customer database table containing data about that consumer or data subject. A system assistant 1202 supports the definition and maintenance of the database infrastructure, while a privacy assistant 1204 supports the definition and maintenance of the tables, dataviews, macros, user profiles, logs, and audit reports. As before, routine applications 110A have access to the customer base tables via a standard view 260, analytic applications 110C have access via an anonymized view in which data that renders the customer identifiable is masked, action (marketing) applications 110D have access via an opt-out view in which entire rows of customer data are omitted, and third party disclosure applications 112 are provided with a dataview which presents only customers who have opted-in, but does not allow access to identifying data. The opt-out/anonymizing dataview can be a separately implemented dataview, or can be implemented applying both the opt-out and anonymizing dataviews.

## Claims

1. A method of controlling the collection and dissemination of data stored in a data warehouse, characterized by the steps of:
accepting a request for a privacy card from a consumer;
querying the consumer for consumer personal information and privacy preferences;
storing a customer unique proxy identifying the customer in the data warehouse; and
issuing a privacy card comprising the proxy to the customer.

2. The method of claim 1, wherein the step of storing a customer unique proxy in the data warehouse comprises the steps of:
generating the proxy;
storing the customer unique proxy in the data warehouse; and
storing the proxy in the privacy card.

3. The method of claim 2, wherein the privacy card is a smart card.

4. The method of claim 1, wherein the step of storing a customer unique proxy in the data warehouse comprises the steps of:
reading the proxy from the privacy card; and
storing the proxy in the data warehouse.

5. The method of claim 1, further comprising the steps of:
receiving a request for a commercial transaction from the consumer, the request comprising the proxy;
associating data about the commercial transaction with the proxy; and
storing the associated commercial transaction data in the data warehouse.

6. The method of claim 1, further comprising the steps of:
accepting a request from the consumer to manage the privacy preferences in the data warehouse; and
verifying the identity of the consumer; and
managing the privacy preferences stored in the data warehouse in accordance with a consumer privacy preference management command.

7. The method of claim 1, wherein the proxy is stored in the data warehouse secure from the consumer personal information.

8. The method of claim 1, wherein a customer unique identification code for is generated and stored for each of a plurality of retailers.

9. An apparatus for controlling the collection and dissemination of data stored in a data warehouse, characterized by :
means for accepting a request for a privacy card from a consumer;
means for querying the consumer for consumer personal information and privacy preferences;
means for storing a customer unique proxy identifying the customer in the data warehouse; and
means for issuing a privacy card comprising the proxy to the customer.

10. The apparatus of claim 9, wherein the means for storing a customer unique proxy in the data warehouse comprises:
means for generating the proxy;
means for storing the customer unique proxy in the data warehouse; and
means for storing the proxy in the privacy card.

11. The apparatus of claim 10, wherein the privacy card is a smart card.

12. The apparatus of claim 9, wherein the means for storing a customer unique proxy in the data warehouse comprises:
means for reading the proxy from the privacy card; and
means for storing the proxy in the data warehouse.

13. The apparatus of claim 9, further comprising:
means for receiving a request for a commercial transaction from the consumer, the request comprising the proxy;
means for associating data about the commercial transaction with the proxy; and
means for storing the associated commercial transaction data in the data warehouse.

14. The apparatus of claim 9, further comprising:
means for accepting a request from the consumer to manage the privacy preferences in the data warehouse; and
means for verifying the identity of the consumer; and
means for managing the privacy preferences stored in the data warehouse in accordance with a consumer privacy preference management command.

15. The apparatus of claim 9, wherein the proxy is stored in the data warehouse secure from the consumer personal information.

16. The apparatus of claim 9, wherein a customer unique identification code for is generated and stored for each of a plurality of retailers.

17. A program storage device, readable by a computer, embodying one or more instructions executable by the computer to perform method steps for controlling the collection and dissemination of data stored in a data warehouse, the method steps characterized by the steps of:
accepting a request for a privacy card from a consumer;
querying the consumer for consumer personal information and privacy preferences;
storing a customer unique proxy identifying the customer in the data warehouse; and
issuing a privacy card comprising the proxy to the customer.

18. The program storage device of claim 17, wherein the method step of storing a customer unique proxy in the data warehouse comprises the method steps of:
generating the proxy;
storing the customer unique proxy in the data warehouse; and
storing the proxy in the privacy card.

19. The program storage of claim 18, wherein the privacy card is a smart card.

20. The program storage device of claim 17, wherein the method step of storing a customer unique proxy in the data warehouse comprises the method steps of:
reading the proxy from the privacy card; and
storing the proxy in the data warehouse.

21. The program storage device of claim 17, wherein the method steps further comprise the method steps of:
receiving a request for a commercial transaction from the consumer, the request comprising the proxy;
associating data about the commercial transaction with the proxy; and
storing the associated commercial transaction data in the data warehouse.

22. The program storage device of claim 17, wherein the method steps further comprising the method steps of:
accepting a request from the consumer to manage the privacy preferences in the data warehouse; and
verifying the identity of the consumer; and
managing the privacy preferences stored in the data warehouse in accordance with a consumer privacy preference management command.

23. The program storage device of claim 17, wherein the proxy is stored in the data warehouse secure from the consumer personal information.

24. The program storage device of claim 17, wherein a customer unique identification code for is generated and stored for each of a plurality of retailers.
